# EUROPÄISCHE PATENTSCHRIFT

(11) **EP 1 251 045 B1**
(45) Veröffentlichungstag und Bekanntmachung des Hinweises auf die Patenterteilung: **29.03.2006**
(21) Anmeldenummer: 02007386.2
(22) Anmeldetag: 09.04.2002
(51) Int. Cl.: B60R 21/20

(54) **Gassackmodul**
Airbag module
Module de coussin gonflable

(30) Priorität: 18.04.2001 DE 20106693 U
(43) Veröffentlichungstag der Anmeldung: 23.10.2002
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas

(56) Entgegenhaltungen:
- DE-A- 19 516 255
- DE-C- 4 134 673
- DE-C- 19 614 276
- GB-A- 2 290 267
- GB-A- 2 339 408
- ANONYMOUS: "Airbag assembly cover attachment" RESEARCH DISCLOSURE, KENNETH MASON PUBLICATIONS, HAMPSHIRE, GB, Bd. 440, Nr. 61, Dezember 2000 (2000-12), XP007127246 ISSN: 0374-4353
- DETLEV WILHELM GUTHKE AND JOACHIM BOROWSKI: "Airbag cover and baseplate attachment" RESEARCH DISCLOSURE, KENNETH MASON PUBLICATIONS, HAMPSHIRE, GB, Bd. 403, Nr. 60, November 1997 (1997-11), XP007122161 ISSN: 0374-4353

## Beschreibung

Die Erfindung betrifft ein Gassackmodul, nach dem Oberbegriff des Anspruchs 1.

Bislang werden die Modulgehäuse an den Bodenplatten durch Verschrauben oder Vernieten befestigt. Auch sogenannte Rastverbindungen mit Schnapphaken, die in Öffnungen einrasten, sind bekannt.

In der gattungsgemäßen DE-C-195 16 255 wird eine Entrastsicherung für eine Verbindung zwischen einer Abdeckkappe und einem Generatorträger eines Gassackmoduls erreicht, indem Ausnehmungen im Generatorträger, in die Vorsprünge am Rand der Abdeckkappe eingreifen, im Querschnitt reduziert werden. Hierzu wird ein Ring mit daran angebrachten Vorsprüngen unterhalb des Generatorträgers so angeordnet, daß die Vorsprünge des Rings ebenfalls in die Ausnehmungen eingreifen und deren Querschnitt verringern.

Die Erfindung schafft ein Gassackmodul, bei dem auf einfache Weise auch beim Öffnen des Modulgehäuses ein unbeabsichtigtes teilweises Lösen von einzelnen Rasthaken ausgeschlossen ist. Dies wird bei einem Gassackmodul der eingangs genannten Art durch die Merkmale des Anspruchs 1 erreicht. Beim erfindungsgemäßen Airbagmodul wird nicht etwa der Rasthaken, der federnd ausgebildet und deshalb schwer greifbar ist, verformt, sondern die Öffnung, aus der das verdickte Ende des Rasthakens heraustreten müßte, wird so im Querschnitt verringert, daß das verdickte Ende nicht mehr aus der Öffnung herausrutschen kann.

Am Modul nahe der Bodenplatte ist ein Bauteil mit einem als Entrastsicherung fungierenden Fortsatz vorgesehen. Dieser Fortsatz ragt in die Öffnung und reduziert den Querschnitt derselben. Das Bauteil muß selbstverständlich nach dem Verrasten zum Gehäuse positioniert werden, um in die Öffnung eindringen zu können.

Die Erfindung bezieht sich in diesem Zusammenhang auf ein Modul für ein Fahrzeuglenkrad, wobei das Bauteil eine mit einem Hupenkontakt versehene, modulfeste Hupenplatte ist. Diese Hupenplatte wird zusammen mit dem Modul zur Betätigung der Hupe axial beweglich zum Rest des Lenkrads gelagert.

Vorzugsweise ist die Bodenplatte ein Generatorträger, also ein Teil, an dem der Gasgenerator des Moduls arretiert ist.

Bei einer anderen, nicht der Erfindung entsprechenden Gestaltung wird die Entrastsicherung durch einen plastisch in Richtung Schnapphaken verformten Abschnitt des Randes der Öffnung gebildet. D.h., nach dem Einrasten des Rasthakens muß noch eine Nachbearbeitung vorgenommen werden. Insbesondere bei Bodenplatten aus Aluminium- oder Magnesium-Druckguß, die bevorzugt beim erfindungsgemäßen Modul verwendet werden, ist ein plastisches Verformen des Randes der Öffnung im Gegensatz zu einer Bodenplatte aus Blech schwer möglich. Um dies zu ermöglichen, ist ein plastisch verformter Wulst am Rand der Öffnung zur Bildung der Entrastsicherung vorgesehen. Dieser Wulst, der auch vor dem Einstecken des Rasthakens da ist, wird nach dem Verrasten, z.B. durch Verstemmen, plastisch deformiert. Der Wulst stellt genügend Material des weichen Aluminiums oder Magnesiums zur Verfügung, so daß beim Verstemmen nicht die Gefahr des Einreißens oder Vergrößerns der Öffnung besteht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht eines zu Erläuterungszwecken dargestellten Gassackmoduls und
- Figur 2 eine Querschnittsansicht einer Ausführungs form des erfindungsgemäßen Gassackmoduls.

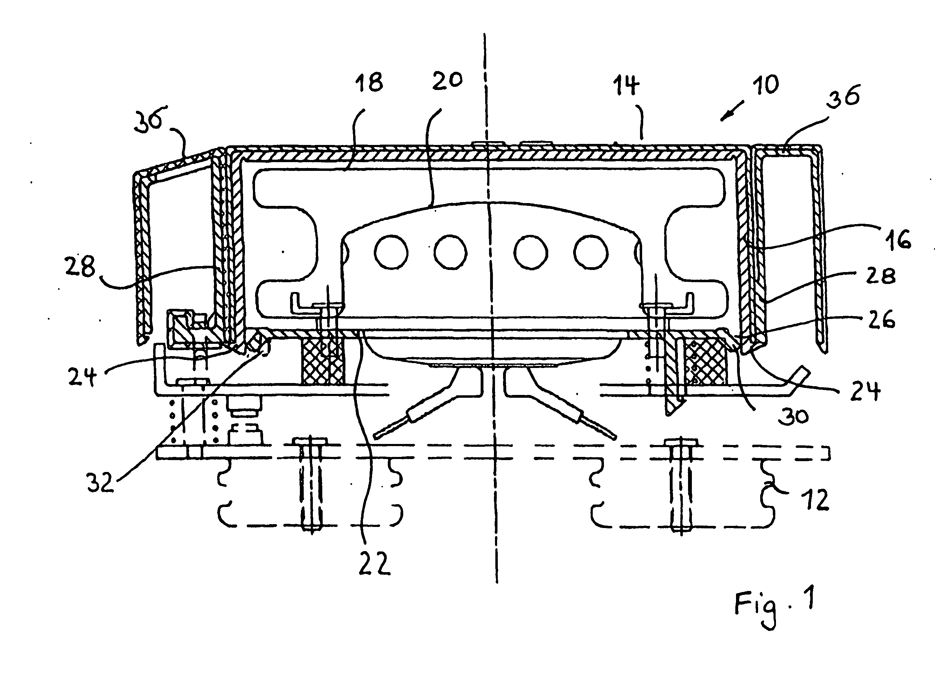

Die Beschreibung des in Fig. 1 dargestellten Gassackmoduls dient dem besseren Verständnis der Erfindung.

In Figur 1 ist ein Fahrzeuglenkrad-Gassackmodul 10 dargestellt, welches an einer stilisiert dargestellten Lenkradnabe 12 befestigt ist. Das Gassackmodul 10 weist ein topfförmiges Modulgehäuse auf, bestehend aus einer öffnenbaren Vorderwand 14 und einer rückseitig von der Vorderwand 14 abstehenden Umfangswand 16. Das Modulgehäuse nimmt einen Gassack 18 und einen Gasgenerator 20 auf. Eine Bodenplatte 22 aus Aluminium- oder Magnesium-Druckguß dient als Generatorträger, da der Gasgenerator 20 an der Bodenplatte 22 festgeschraubt ist.

Die Bodenplatte 22 ist mit der Umfangswand 16 durch mehrere am Umfang gleichmäßig verteilte Rastverbindungen verbunden und schließt das Modulgehäuse rückseitig. Die Rastverbindungen bestehen aus Schnapphaken 24 am unteren Rand der Umfangswand 16, die durch Öffnungen 26 in der Bodenplatte ragen und den Rand der Öffnungen 26 verriegelnd hintergreifen. Die Bodenplatte 22 hat neben ihrem radial einwärts der Umfangswand 16 liegenden Abschnitt noch radial auswärts der Öffnungen 26 einen sich aufwärts parallel zur Umfangswand 16 erstreckenden Abschnitt 28, der die Umfangswand 16 umgibt und einstückig mit einem vorderen Rand 36 verbunden ist, der eine seitliche Fortsetzung der Vorderwand 14 bildet.

Damit die Schnapphaken 24 beim Öffnen der Vorderwand 14 durch den sich entfaltenden Gassack 18 nicht radial einwärts gebogen werden und sich entriegeln, ist eine Entrastsicherung an jedem Schnapphaken 24 vorgesehen.

Die Entrastsicherung wird durch einen Abschnitt des Randes 30 der Öffnungen 26 gebildet, der mit einem nach unten abstehenden Wulst 32 versehen ist.

Beim Aufsetzen des Modulgehäuses auf die Bodenplatte 22 steht der Wulst 32, wie auf der linken Hälfte von Figur 1 mit unterbrochenen Linien gezeigt, axial nach unten ab. Die Öffnungen 26 sind damit groß genug, um ein Durchtreten der Schnapphaken 24 zu erlauben. Anschließend wird an jeder Öffnung 26 der wulstartige Rand 30 radial nach außen plastisch verformt, z.B. durch Verstemmen, so daß der Querschnitt jeder Öffnung 26 ausreichend verringert wird, um ein Entrasten der Schnapphaken 24 auszuschließen.

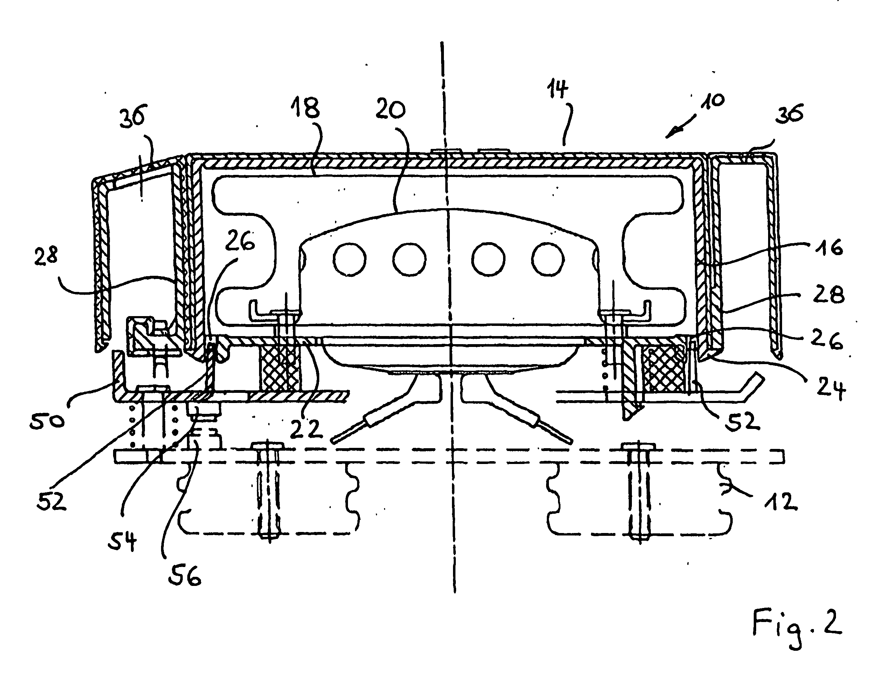

Die erfindungsgemäße Ausführungsform nach Figur 2 entspricht im wesentlichen dem in Figur 1 gezeigten Gassackmodul, so daß bereits eingeführte Bezugszeichen für funktionsgleiche Teile beibehalten werden.

Im Unterschied zur Gassackmodul nach Figur 1 ist die Entrastsicherung bei der Ausführungsform nach Figur 2 nicht durch Umformen des Randes der Öffnungen 26 gebildet. Bei dieser Ausführungsform ist ein nahe der Bodenplatte 22 vorgesehenes Teil in Form einer Hupenplatte 50 im Bereich unterhalb jeder Öffnung 26 mit einem in die Öffnung 26 ragenden Fortsatz 52 versehen, der den Querschnitt der zugeordneten Öffnung 26 so reduziert, daß er als Entrastsicherung dient und ein Entrasten des zugeordneten Schnapphakens 24 ausschließt.

Die Hupenplatte 50 ist im übrigen modulfest, d.h. zusammen mit dem Modul beweglich. Ein an der Unterseite der Hupenplatte 50 vorgesehener Hupenkontakt 54 kommt beim Drücken des Moduls in axialer Richtung nach unten mit einem zweiten Hupenkontakt 56 in Berührung, um einen Stromkreis zur Hupenbetätigung zu schließen.

## Patentansprüche

1. Gassackmodul, das als Lenkradmodul ausgebildet ist, mit
einem topfförmigen Modulgehäuse, das eine öffenbare Vorderwand (14) und eine rückseitig abstehende Umfangswand (16) aufweist, sowie
mit einer Bodenplatte (22), die an der Umfangswand (16) durch wenigstens einen in eine Öffnung (26) einrastbaren Schnapphaken (24) befestigt ist,
mit einer Entrastsicherung, die den Querschnitt der Öffnung (26) nach dem Einrasten so verringert, daß ein Entrasten verhindert wird,
wobei am Gassackmodul nahe der Bodenplatte (22) ein separates Bauteil mit einem als Entrastsicherung fungierenden Fortsatz (52) vorgesehen ist, der in die Öffnung (26) ragt und deren Querschnitt reduziert,
**dadurch gekennzeichnet, daß** das Bauteil eine mit einem Hupenkontakt (54) versehene, modulfeste Hupenplatte (50) ist.

2. Gassackmodul nach Anspruch 1, **gekennzeichnet durch** einen Gasgenerator (20), der an der als Generatorträger fungierenden Bodenplatte (22) befestigt ist.

3. Gassackmodul nach einem der vorhergehenden Ansprüche, **dadurch gekennzeichnet, daß** die Bodenplatte (22) ein Aluminium- oder Magnesium-Druckgußteil ist.

## Claims

1. An airbag module which is in the form of a steering wheel module, comprising
a pot-shaped module housing having a front wall (14) that can be opened and a circumferential wall (16) projecting on the rear side, and
a base plate (22) that is attached to the circumferential wall (16) by at least one snap-action hook (24) that is able to latch into an opening (26),
an unlatching protection that reduces the cross-section of the opening (26) after the latching process in such a way that unlatching is prevented,
a separate component being provided on the airbag module near the base plate (22), the component having a projection (52) that functions as the unlatching protection and that protrudes into the opening (26) and reduces its cross-section,
**characterized in that** the component is a horn plate (50) provided with a horn contact (54) and fixed to the module.

2. The airbag module according to Claim 1, **characterized by** a gas generator (20) that is attached to the base plate (22) functioning as the generator carrier.

3. The airbag module according to either of the preceding claims, **characterized in that** the base plate (22) is an aluminum or magnesium diecast part.

## Revendications

1. Module de coussin à gaz, qui est réalisé sous forme de module de volant de direction, comportant
un boîtier de module en forme de pot, qui présente une paroi antérieure (14) apte à s'ouvrir et une paroi périphérique faisant saillie sur la face postérieure, ainsi que
une plaque de fond (22) qui est fixée sur la paroi périphérique (16) par au moins un crochet d'encliquetage (24) apte à s'enclencher dans une ouverture (26),
une sécurité anti-désenclenchement qui réduit la section transversale de l'ouverture (26) après l'enclenchement de manière à empêcher un désenclenchement,
un composant séparé avec un prolongement (52) servant de sécurité anti-déclenchement étant prévu dans le module de coussin à gaz près de la plaque de fond (22), prolongement qui fait saillie dans l'ouverture (26) et réduit sa section transversale,
**caractérisé en ce que** le composant est une plaque de klaxon (50) solidaire du module et pourvue d'un contact de klaxon (54).

2. Module de coussin à gaz de coussin à gaz selon la revendication 1, **caractérisé par** un générateur de gaz (20) qui est fixé sur la plaque de fond (22) servant de support de générateur.

3. Module de coussin à gaz selon l'une des revendications précédentes, **caractérisé en ce que** la plaque de fond (22) est une pièce moulée sous pression en aluminium ou en magnésium.
